# EUROPEAN PATENT APPLICATION

(11) **EP 3 247 083 A1**
(43) Date of publication of application: **22.11.2017**
(21) Application number: 16305569.2
(22) Date of filing: 17.05.2016
(51) Int. Cl.: H04L 29/06, H04L 12/24, H04L 9/08, H04W 12/04, H04W 4/00

(54) **SYSTEM OF FLEXIBLE SECURE IOT NETWORKS**

(71) Applicant: GEMALTO SA, 92190 Meudon (FR)
(72) Inventor: BROLH, Abraham, 95150 Taverny (FR); MALLET, Chrystèle, 92120 Montrouge (FR); BLOCHET, Marc, 78000 Versailles (FR)

(57) **Abstract**

The present invention relates to a system to provision flexible secure Internet of Things networks (Ni) owned by owners, said system comprising at least a device provisioning server (DPS), as many gateways (GWi) as loT networks (Ni), devices (Di) to be connected to loT network (Ni) and a configurator (CFG), said configurator (CFG) having connectivity adapted to connect to device provisioning server (DPS) using a certificate (CCFG) indicating its identity and its configuration function to get at least, for each loT network (Ni), an unique key (DK_LINK), gateway network information and identifier (GWi) and an upper level key (DK_DTLS) to be used to derive device keys (DDK_DTLS) to be sent to devices (Di) in order to enable them to communicate with the device provisioning server (DPS), said configurator (CFG) having a non-encrypted link layer enabling any device (Di) to connect to it any time to get parameters enabling them to get connectivity in a given network (Ni) of the system.

## Description

### FIELD OF THE INVENTION

The present invention relates to a system to provision flexible secure Internet of Things networks owned by owners.

The invention also pertains to a method to create such a system and to a method for a device to integrate a secure IoT network of the invention.

### BACKGROUND OF THE INVENTION

Today, in most of IoT solutions, in particular those based on mesh networking, there is no security at all. For those that are secured, the most common solution is to use encryption based on keys that are preinstalled, hardcoded, in factory. Therefore, if those keys are used for a link layer encryption, they have to be known by the gateway and the devices connected to it will never be able to connect to another gateway in their entire life. Moreover, if the keys happen to go public, the security of the whole network using them is compromised.

Some solutions embedding various amounts of keys in the device to adapt its usage to the network it wants to connect exist. However, these kind of solutions are still requiring hardcoded keys and device personalization in dedicated premises.

Further alternative and advantageous solutions would, accordingly, be desirable in the art.

### SUMMARY OF THE INVENTION

The present invention aims at provisioning secure data to Secure IoT networks to enable the various IoT devices to connect to one or the other of the available networks.

The present invention is defined, in its broadest sense, as a system to provision flexible secure Internet of Things networks owned by owners, said system comprising at least a device provisioning server, as many gateways as IoT networks, devices to be connected to IoT network and a configurator,
said device provisioning server having memory to store at least a master key per owner and network owner accounts,
said gateways having each a secure environment storing at least an identifier certificate, issued by the device provisioning server for every network owner having an account and to be used for identification and declaration to the device provisioning server, said secure environment further storing a unique key derived from the master key and received from the device provisioning server after identification and declaration of the gateway, said unique key being used as link layer encryption key by devices connected in the corresponding IoT network,
said configurator having connectivity adapted to connect to device provisioning server using a certificate indicating its identity and its configuration function to get at least, for each IoT network, the unique key, gateway network information and identifier and an upper level key to be used to derive device keys to be sent to devices in order to enable them to communicate with the device provisioning server, said configurator having a non-encrypted link layer enabling any device to connect to it,
said devices being adapted to be connected to said configurator any time to get parameters enabling them to get connectivity in any given network of the system.

The solution of the invention proposes to secure IoT networks while keeping the keys dynamics and thus allow user to move a device from a secured network to another, change network keys and thus enable more secured and more flexible IoT networks through connection any time to the configurator of the invention. Overall, it reduces personalization phase in factory as it allows including a new device in a secured network without hardcoded key installed in factory.

According to an advantageous embodiment, said configurator includes a secure environment to manage keys and certificates.

This embodiment enables to increase security in the whole system by insuring the configurator to be safe.

According to an advantageous feature, said configurator has a graphical user interface.

This feature enables an owner of the networks to insert a new device or a device user to move a device from a network to another via the configurator by a wireless connection. The configurator connects to the device, e.g. by Bluetooth or 802.15.4. The configurator shall be near the device, in a near to middle field. Also, the configurator can connect to the DPS via internet using a wifi or Ethernet link, typically in a web server interface. The configurator can further comprise scanner to read a tag or a bar code on the devices to be configured.

The present invention also relates to a method to create a system of the invention, comprising the steps of:
- for gateways, declaring themselves to device provisioning server as owned and installed,
- for the configurator, connecting to device provisioning server to get gateways security information,
- for a device willing to connect to a given gateway, connecting to the configurator to be configured according to security information gathered from the device provisioning server and then connecting to gateway and to device provisioning server as parameters indicated.

Such a method enables to build a flexible web of independent and secure networks to be used by any devices for their needs.

The invention also relates to a method for a device to integrate an IoT network in a system as defined in the invention, comprising the steps of:
- connecting to a configurator to be configured according to security information gathered from the device provisioning server and then,
- connecting to gateway of the IoT network and to the device provisioning server as parameters indicated.

This method is implemented by any device willing to connect to a given network it is not connected to. As the connection to the configurator is done without protection using any pre-shared key, it can be done anytime, whatever be the network to which the device was previously connected. Thus, in an implementation, each actor, devices and configurator, exchanges a password in clear mode. Those passwords are basic materials to build a common key and exchange then encrypted data.

According to the invention, the method can comprise a step, for a device previously configured in a first IoT network, to request reconfiguration to integrate another gateway IoT network.

This step provides the greatest flexibility to the secure network system as any device can request to change the network it is securely connected to.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a system of the invention;
- Figure 2 schematically shows the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

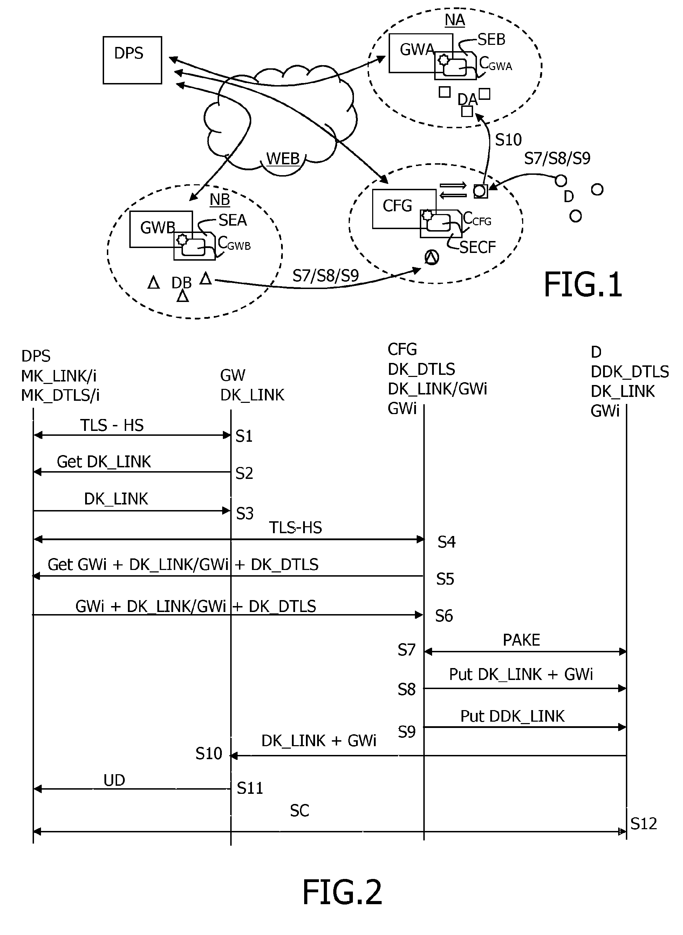

Figure 1 represents a system of the invention. It comprises several IoT networks, here NA and NB. Each of these networks have a gateway, here GWA and GWB. Devices DA, DB are configured to operate in one or the other of the networks. A device provisioning server DPS and a configurator CFG are the main elements of the system of the invention. The device provisioning server DPS communicates with the configurator CFG and with the networks through the internet WEB.

The configurator has a certificate C_{CFG} and each gateway Gwi has its own certificate C_{Gwi}. These certificates are used for declaration and identification purpose to the device provisioning server DPS.

The principles of the invention are the following: gateways GW declare themselves to device provisioning server DPS as owned and installed. Owner Configurator CFG connects to device provisioning server DPS to get gateways security information. Configurator CFG connects to device D and configures it according to information gathered from server. Device can now connect to gateway GW as parameters indicated. Device D can be reconfigured to integrate another gateway GW and another IoT network N.

In the architecture of the invention, a gateway GWi is needed for each IoT network. Its role is to connect the IoT network Ni to the internet WEB and ultimately to service provider servers in a cloud accessible on internet WEB. In each network Ni, communications between the gateway GWi and IoT devices Di are secured by enciphering the link layer. To encipher properly this link layer, the gateway GWi gets a key from the device provisionning server DPS, the DK_LINK key. To get this key securely, so to communicate with the device provisionning server DPS securely, a secure environment, typically a secure element SEi, containing an Identifier Certificate C_{GWi}, issued for every owner, is embedded in the gateway GWi.

The device provisioning server DPS stores owner accounts. Each owner manages at least one network, knowing that a same owner can own several networks. In this last case, the gateways in the concerned networks will have a same certificate or, in any case, a certificate enabling to identify the right owner. The owner account aims to link the gateways GWi, and therefore their SEi, and their owner, as an owner can own several IoT networks Ni implying several gateways GWi. A gateway GWi cannot be used if there is no related owner account. Using the owner account, the gateway GWi is declared and managed on the device provisioning server DPS.

Figure 2 shows schematically the method of the invention. The beginning of the method consists, for the gateway GWi, to be identified at the server DPS.

Thus, in a first step S1, the certificate CGWi is used in a TLS handshake between the gateway GWi and the device provisioning server DPS. During this process, the gateway GWi identifies and declares itself to the device provisioning server DPS as a gateway GWi owned by an identified owner i. The both entities, gateway GWi and device provisioning server DPS, are then identified and certified.

Consecutively, in a step S2, the gateway GWi sends a Get DK_LINK command to the server DPS. In a step S3, recognizing a known certificate, the server DPS issues and securely delivers to the gateway SE a unique Key, the DK_LINK. This key DK_LINK is derived from a master key MK_LINK associated to the owner and stored in the server DPS and from some data provided during the gateway GWi registration to the server DPS. The gateway GWi uses this DK_LINK key as its link layer encryption key for its network Ni whatever the radio technology used. At this level, the gateway GWi is declared and its link layer secured.

Then, a non-configured IoT device D requesting a connection to this newly established wireless network needs to have the link key, DK_LINK, and the identifier of the network i, which is typically an identifier of the gateway GWi. The setup of those parameters into the device D is performed by a specific and autonomous gateway called configurator CFG.

The configurator CFG aims to configure any IoT device D with parameters to make it able to be inserted in a secured network Ni. It is advantageously a portable independent device. It shall include a Graphical User Interface, an access to the internet, at least sporadic, and all needed radio peripheral to communicate with the devices D to be configured. It may advantageously embed a secure environment, typically a secure element SECF to manage keys and certificates.

The configurator CFG shall itself be configured. Indeed, to provide parameters to devices D, the configurator CFG shall gather this information from the device provisioning server DPS which registers the gateways GWi with their identifier and their associated keys DK_LINK.

To get this information, it connects to the device provisioning server DPS in a step S4 using a certificate CCFG indicating its identity and its function of configurator. The certificate CCFG is used in a TLS handshake between the server DPS and the configurator CFG. During this process, the configurator CFG identifies and declares itself to the server DPS using credentials of the gateway owner i. Credentials can be of various nature. For example they are an account associated to a password related to the owner of the network. Therefore, the configurator CFG is authenticated via the certificate CCFG and its related secure element. The user of the configurator CFG is authenticated with the account and the password asked by the DPS. Hence the DPS gives the list of networks related to this one and only account.

Thus, a secured exchange starting with a get command in step S5, allows the configurator CFG to get, in a step S6, all the gateways identifiers, network parameters and keys owned by the owner as well as possibly network topology information. These lasts comprise at least the DK_LINKs keys associated to each gateway, the gateways network information and identifier and an upper level key DK_DTLS key for each network Ni.

The key DK_DTLS is derived from a mother key MK_DTLS owned by the device provisioning server DPS. The key DK_DTLS is used as a basis to derive more keys DDK_DTLSs. These lasts are transmitted to final devices D for them to communicate securely with the server DPS.

Keys and other parameters shall be either pushed as is by the configurator CFG in the devices D, or either used in the GUI of the configurator CFG to let a user locally manage his devices D. Here the "user" can be a customer, user of a device, or the owner of one of the networks.

The communication with the device provisioning server DPS would have to be done each time an owner i installs a new gateway GWi. In other cases, the configurator CFG could be independent from either the network Ni or the internet WEB, and set the device network parameters and keys on an as-needed basis for every new device D to add.

For example, an implementation of a configurator CFG could be a raspberry-PI embedding an 802.15.4 peripheral, with Wi-Fi hotspot capabilities and running a webserver. Thus, simple smartphone or tablet may be used to connect to the configurator CFG and show a management page of connected devices D on the GUI. This management page shows and allows modifications of the parameters of any device D that has a connection with it. It could also reset it to factory settings.

The configurator CFG embeds a translating/routing application that takes requests from the webpage of the webserver and forwards them to the device D according to the radio needed.

Device D to be configured could be capable of either BLE, 802.15.4 or any other radio. A device D compatible with this solution shall comprise a set of parameters that could be securely and remotely written. For example these parameters could be COAP (Constrained Application Protocol) resources. Such connection of the device is based on REST architecture which uses to handle "resources" as an abstract thing as anything accessed by the supplied URL. Typically, a resource can be read (by a GET command), updated (by a PUT command), created (by a POST command) or deleted (by a DELETE command). Advantageously devices D support a process of authentication and key exchange like PAKE based on a password to create a common key that is used to transfer securely the network parameters.

The network parameters allow the device D to connect securely to its future network and not to any other one. Although, it could be connected to a configurator CFG at any time automatically or upon specific manipulation such as pushing a specific button for example. Other parameters could be set this way, such as, for example, a setting indicating the service provider server address to which the device D is aimed to connect to in its IoT device life.

An example of device D insertion according to the invention is illustrated on figure 2. The link layer defined by the configurator CFG is not encrypted therefore any IoT device D can connect to it. However, a process of authentication and key exchange is performed in a step S7 to secure the communication between the configurator CFG and the device D. A PAKE authentication using password is advantageously performed. In answer, the configurator CFG puts a key DK_LINK and a gateway identifier GWi in the device D in a step S8. It also puts a key DDK_DTLS in a step S9.

Once a communication is established, a process of network parameters update on the device D is done by the configurator CFG. It can be automated, as well as it can be manually managed by the user, thanks to the human interface of the configurator CFG. The user of a device D can choose the network Ni to insert the device D into, if he needs it. Also, in case of multiple devices present in the vicinity, the user can select its target(s) on by identifier(s), e.g. device MAC address for instance.

The device D can then only be inserted in the network it aims to be connected to by using the key DK_LINK and the gateway identifier GWi in a step S10.

In a consecutive step S11, the gateway GWi to which the device Di has been connected provides an update UD of the user's device list to the device provisioning server DPS. This serves for further direct secure connection SC in a step S12 between the device Di and the server DPS using the key DDK_DTLS, this connection being done through gateway GWi and the internet WEB.

However, if needed, any device D still can be connected to the configurator CFG again, for example to move from a network NB to another network NA as illustrated on figure 1 where a device DB connects again to the configurator CFG. Thus, any already configured device D can still securely connects to the configurator CFG. Thus, if a user wants to move a device D from a secured network to another, it can be done using the configurator CFG just like for the first insertion of this device D in its current network. The device D is not permanently locked into a secured network.

As for any network parameters, any solution of activating, launching, loading, personalizing or updating any application on a device D could be done using the system described as every step is done securely.

With the invention, secure IoT networks keep flexibility of changing networks configurations, of moving a device from a network to another for example. Personalization in factory is lighten. There is no need to have a secure environment in each of the IoT devices and there is no need to personalize data related to final deployment in factory. IoT devices are generic until their insertion into the final network. IoT devices are configured locally with all required parameters specific to each production infrastructure. They do not interact with the production infrastructure until they are fully configured and secured. There is thus no need for a bootstrap subscription.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. System to provision flexible secure Internet of Things networks (Ni) owned by owners, said system comprising at least a device provisioning server (DPS), as many gateways (GWi) as IoT networks (Ni), devices (Di) to be connected to IoT network and a configurator (CFG),
said device provisioning server (DPS) having memory to store at least a master key per owner (MK_LINK) and network owner accounts,
said gateways (GWi) having each a secure environment (SEi) storing at least an identifier certificate (CGWi), issued by the device provisioning server (DPS) for every network owner having an account and to be used for identification and declaration to the device provisioning server (DPS), said secure environment (SEi) further storing a unique key (DK_LINK) derived from the master key (MK_LINK) and received from the device provisioning server (DPS) after identification and declaration of the gateway (GWi), said unique key (DK_LINK) being used as link layer encryption key by devices (Di) connected in the corresponding IoT network (Ni),
said configurator (CFG) having connectivity adapted to connect to device provisioning server (DPS) using a certificate (CCFG) indicating its identity and its configuration function to get at least, for each IoT network (Ni), the unique key (DK_LINK), gateway network information and identifier (GWi) and an upper level key (DK_DTLS) to be used to derive device keys (DDK_DTLS) to be sent to devices (Di) in order to enable them to communicate with the device provisioning server (DPS), said configurator (CFG) having a non-encrypted link layer enabling any device (Di) to connect to it,
said devices (Di) being adapted to be connected to said configurator (CFG) any time to get parameters enabling them to get connectivity in a given network (Ni) of the system.

2. System according to claim 1, wherein said configurator (CFG) includes a secure environment (SECF) to manage keys and certificates.

3. System according to claim 1, wherein said configurator (CFG) has a graphical user interface.

4. Method to create a system as claimed in one of the preceding claims, comprising the steps of:
- for gateways (GWi), declaring (S1,S2,S3) themselves to device provisioning server (DPS) as owned and installed,
- for the configurator (CFG), connecting to device provisioning server (DPS) to get (S4,S5,S6) gateways security information,
- for a device (Di) willing to connect to a given gateway (GWi), connecting to the configurator (CFG) to be configured (S7,S8,S9) according to security information gathered from the device provisioning server (DPS) and then connecting (S10,S11,S12) to gateway (GWi) and to device provisioning server (DPS) as parameters indicated.

5. Method for a device (Di) to integrate an IoT network (Ni) in a system as claimed in one of claims 1 to 3, comprising the steps of:
- connecting to a configurator (CFG) to be configured according to security information gathered from the device provisioning server (DPS) and then,
- connecting to gateway (GWi) of the IoT network (Ni) and to the device provisioning server (DPS) as parameters indicated.

6. Method for a device to integrate an IoT network as claimed in claim 5, comprising a step, for a device (DB) previously configured in a first IoT network (NB), to request reconfiguration to integrate another gateway IoT network (NA).
